# EUROPEAN PATENT APPLICATION

(11) **EP 4 455 244 A1**
(43) Date of publication of application: **30.10.2024**
(21) Application number: 23771134.6
(22) Date of filing: 17.03.2023
(51) Int. Cl.: C09J 133/00, C09J 11/06, C09J 7/38, C09D 7/20, C09D 133/00, C08F 218/08, C08F 220/06, C08F 265/06, C08F 220/18

(54) **ECO-FRIENDLY ADHESIVE RESIN PREPARED BY LOW CARBON EMISSION PROCESS, ADHESIVE COMPOSITION COMPRISING SAME, AND ADHESIVE LAYER FORMED BY USING SAME**

(30) Priority: 17.03.2022 KR 20220033134; 29.06.2022 KR 20220079528
(71) Applicant: Chem CO Co., Ltd, Chungcheongnam-do 31094 (KR)
(72) Inventor: KO, Seiyun, Cheonan-si Chungcheongnam-do 31091 (KR)
(74) Representative: AWA Sweden AB
(86) International application number: PCT/KR2023/003577
(87) International publication number: WO 2023/177255

(57) **Abstract**

The present invention relates to a method for manufacturing an eco-friendly adhesive resin using a low-carbon emission process, the adhesive resin prepared thereby, an adhesive composition containing the adhesive resin, and an adhesive layer formed using same. In the present invention, a colloidal adhesive resin having a core-shell structure is manufactured using an amphiphilic polymer and a hydrophobic monomer. By using the manufacturing method according to the present invention, it is possible to reduce carbon emissions compared to conventional processes and decrease the viscosity of the adhesive resin without difficulty using only a small amount of solvent. In addition, by using the present invention, it is possible to reduce the energy consumed in drying the adhesive layer and can form an eco-friendly adhesive layer having excellent adhesiveness and heat resistance.

## Description

### [Technical Field]

The present invention relates to an eco-friendly adhesive resin manufactured using a low-carbon emission process, an adhesive composition comprising the same, and an adhesive layer formed therefrom. More specifically, the present invention pertains to a method of manufacturing eco-friendly adhesive resin using a low-carbon emission process that reduces greenhouse gas emissions by utilizing a smaller amount of solvent compared to conventional techniques, the adhesive resin manufactured thereby, the adhesive composition comprising the resin, and the adhesive layer formed using the same.

### [Background Art]

Recently, due to the severity of environmental pollution and climate change issues, the international community has been discussing measures to reduce carbon emissions. In this context, the Intergovernmental Panel on Climate Change (IPCC) proposed at its 48th session in 2018 that CO₂ emissions need to be reduced by at least 45% by 2030 compared to 2010 levels. Carbon emission issues are also significant in chemical-based sectors such as adhesives, where there is increasing interest in reducing the carbon footprint of manufacturing processes and products.

Adhesives are typically composed of resins produced by polymerizing monomers in a solvent, along with solvents and hardeners. The adhesive manufacturing process involves the use of large amounts of solvent for resin polymerization and viscosity adjustment, and temperature control for polymerization and adhesive layer formation. As such, the adhesive manufacturing process consumes a substantial amount of energy for heating and drying, thereby contributing to carbon emissions, necessitating the development of technologies to reduce carbon emissions in adhesive manufacturing processes.

Conventional eco-friendly adhesive manufacturing technologies, such as those disclosed in Korean Patent Publication No. 10-2012-0051596, have developed in a direction that eliminates the use of harmful solvents (e.g., toluene) or manufactures water-based adhesives dispersed in water as disclosed in Korean Patent Registration No. 10-1115681. However, these technologies are intended to reduce the harmfulness of the adhesive itself, and have limitations as they do not address the reduction of carbon emissions in the manufacturing process such as heating, drying, etc.

Thus, there is an urgent need to develop low-carbon processes in response to regulations and other measures related to carbon emissions, as current technologies for reducing carbon emissions in adhesive manufacturing processes are insufficient.

### [Disclosure]

### [Technical Problem]

The objective of the present invention is to provide a method for manufacturing an eco-friendly adhesive resin with superior physical properties using a low-carbon emission process.

Another objective of the present invention is to provide an eco-friendly adhesive resin manufactured by this method.

Yet another objective of the present invention is to provide an adhesive composition that comprises the eco-friendly adhesive resin.

Another objective of the present invention is to provide an adhesive layer manufactured using the eco-friendly adhesive resin.

### [Technical Solution]

To achieve these objectives, the present invention provides a method for manufacturing eco-friendly adhesive resin, which comprises the steps of: (i) polymerizing a hydrophilic monomer and a hydrophobic monomer to produce an amphiphilic polymer; and (ii) adding a hydrophobic monomer to the amphiphilic polymer and reacting them to form a colloidal adhesive resin comprising a core comprising the hydrophobic monomer and a shell comprising the amphiphilic polymer.

The weight ratio of the hydrophilic monomer to the hydrophobic monomer in the step (i) can be from 1:1 to 1:15.

The hydrophilic monomer may comprise at least one monomer containing one or more functional groups selected from carboxylic, hydroxy, amine, and ether groups.

The hydrophobic monomers in the steps (i) and (ii), respectively, may independently comprise one or more monomers selected from vinyl ester-based monomers and alkyl (meth)acrylate-based monomers.

In the step (ii), 20 parts by weight or less of the hydrophilic monomer may be further added per 100 parts by weight of the hydrophobic monomer.

The total weight of the monomers used in the step (ii) may be 200 to 500 parts by weight per 100 parts by weight of the total monomers used in the step (i).

The reactions in the steps (i) and (ii) may be performed in a solvent.

In the step (i), 50 to 200 parts by weight of solvent may be used per 100 parts by weight of the total monomers.

In the step (ii), 10 to 150 parts by weight of solvent may be used per 100 parts by weight of the total monomers.

The boiling point of the solvent used in the reactions of the steps (i) and (ii) is preferably 80°C or lower.

The solvent used in the reactions of the steps (i) and (ii) may independently be a solvent mixture comprising ethyl acetate and one or more cosolvents.

The reactions in the steps (i) and (ii) may be carried out using a polymerization initiator.

The present invention also provides the eco-friendly adhesive resin manufactured by the method described above.

The present invention further provides an eco-friendly adhesive composition comprising the eco-friendly adhesive resin and a curing agent.

In the present invention, the curing agent may be comprised in an amount of 0.01 to 5 parts by weight per 100 parts by weight of the adhesive resin.

The adhesive composition of the present invention may further comprise a coating solvent.

The coating solvent may be comprised in an amount of 5 to 40 parts by weight per 100 parts by weight of the adhesive resin.

The present invention also provides an eco-friendly adhesive layer formed using the eco-friendly adhesive resin.

In the present invention, the thickness of the adhesive layer can be 5 to 500µm.

### [Advantageous Effects]

The adhesive resin manufacturing method of the present invention uses less solvent compared to conventional processes and can smoothly reduce the viscosity even with a small amount of solvent when diluting the resin for application of the adhesive. Moreover, resin manufacturing is possible with low-boiling-point solvents, which can reduce the time consumed for drying the adhesive layer. The adhesive manufactured using the present invention exhibits superior adhesion and heat resistance compared to those manufactured by conventional processes. Thus, the present invention allows the manufacture of high-quality adhesives through an environmentally friendly process with significantly reduced carbon emissions.

### [Brief Description of Drawings]

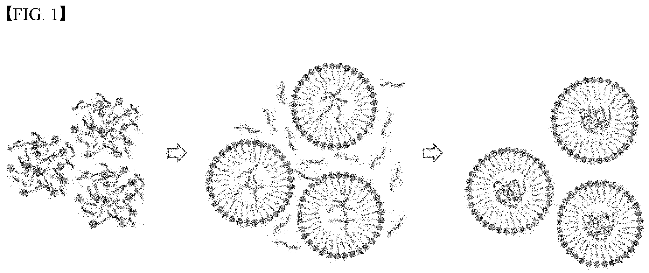

Fig. 1 schematically illustrates the manufacturing process of the eco-friendly adhesive resin according to an embodiment of the present invention.

### [Best Model

In the following, specific embodiments of the present invention will be described in more detail. Unless defined otherwise, all technical and scientific terms used in this specification have the same meanings as commonly understood by those of ordinary skill in the art to which the present invention pertains. Generally, the nomenclature used in this specification is well-known and commonly practiced in the art.

The present invention relates to a method for manufacturing an eco-friendly adhesive resin using a low-carbon emission process.

The adhesive resin of the present invention is highly productive due to its high concentration, and its viscosity decreases smoothly even with a small amount of solvent when diluted for coating. Consequently, it is possible to reduce the amount of solvent used and the content of solvent per unit area during application, saving energy required for the volatilization of solvents. Moreover, using low-boiling-point solvents also allows for the reduction of drying temperatures, further decreasing energy consumption. The adhesive resin of the present invention enables the production of adhesive layers (such as tapes and films) with excellent adhesion and heat resistance.

The present invention is characterized by producing a colloidal adhesive resin with a core-shell structure using amphiphilic polymers and hydrophobic monomers.

Specifically, the method for manufacturing eco-friendly adhesive resin according to the present invention comprises the steps of: (i) polymerizing a hydrophilic monomer and a hydrophobic monomer to produce an amphiphilic polymer; and (ii) adding a hydrophobic monomer to the amphiphilic polymer and reacting them, thereby producing a colloidal adhesive resin that comprises a core comprising the hydrophobic monomer and a shell comprising the amphiphilic polymer.

Fig. 1 schematically illustrates the manufacturing process of the adhesive resin of the present invention. Referring to Fig. 1, when relatively hydrophobic monomers are introduced into amphiphilic polymers obtained by polymerizing hydrophilic and hydrophobic monomers, a mixture of amphiphilic polymer material and hydrophobic monomers is formed. As the reaction proceeds in this state, the amphiphilic polymers and hydrophobic monomers begin to form a core-shell structure, and micelles are formed by the amphiphilic polymers forming the shell. As the polymerization of the hydrophobic monomers progresses and their molecular weight increases, the hydrophobic monomers are positioned inside the micelle, and polymerization proceeds. Thus, a colloidal adhesive resin with a core-shell structure is manufactured.

In the step (i), hydrophilic monomers may comprise one or more monomers that have one or more functional groups such as carboxyl, hydroxyl, amine, and ether.

Specifically, the hydrophilic monomers may comprise one or more of the following: acrylic acid (AA), methacrylic acid (MAA), β-carboxyethyl acrylate (β-CEA), itaconic acid, fumaric acid, maleic acid, 2-hydroxyethyl acrylate (2-HEA), 2-hydroxyethyl methacrylate (2-HEMA), 2-hydroxypropyl acrylate (2-HPA), 2-hydroxypropyl methacrylate (2-HPMA), 4-hydroxybutyl acrylate (4-HBA), polyethylene glycol mono(meth)acrylate, acryloyl morpholine (ACMO), 2-(dimethylamino)ethyl (meth)acrylate (DMAE(M)A), polyethylene glycol monomethyl ether (meth)acrylate (MPEG(M)A), and 2-(2-ethoxyethoxy)ethyl (meth)acrylate (EOEOE(M)A).

In the step (i), hydrophobic monomers can be those with a water solubility (at 20°C) of 5g/100mL or less, comprising one or more monomers selected from vinyl ester-based monomers and alkyl (meth)acrylate-based monomers, preferably comprising one or more of vinyl ester-based monomers and alkyl (meth)acrylate-based monomers with carbon chains of 4 to 24.

For example, as the hydrophobic monomers, one or more of vinyl acetate (VA), methyl acrylate (MA), ethyl acrylate (EA), butyl acrylate (BA), 2-ethylhexyl acrylate (2-EHA), lauryl methacrylate (LMA), cyclohexyl methacrylate (CHMA), iso-octyl acrylate, stearyl acrylate, and vinyl 2-ethylhexanoate may be used.

In the step (i), the hydrophilic monomer and hydrophobic monomer can be mixed in a weight ratio of 1:1 to 1:15, preferably 1:2.5 to 1:12. Within this range, suitable amphiphilic polymers for subsequent processes can be formed by the polymerization of the hydrophilic monomer and hydrophobic monomer.

In the step (i), the hydrophilic monomer and hydrophobic monomer react in a solvent and can be dispersed in the solvent after the reaction. Solvents can include organic solvents such as esters, ketones, and alcohols, and it is preferable to use low-boiling-point solvents with boiling points below 80°C. Low-boiling-point solvents may include one or more of ethyl acetate (boiling point 77.1°C), ethyl alcohol (boiling point 78.4°C), acetone (boiling point 56.0°C), methanol (boiling point 64.7°C), and methyl ethyl ketone (boiling point 79.6°C).

In the present invention, if it is desired to recover and reuse the solvent, ethyl acetate can be used alone or in combination with a cosolvent such as acetone or ethanol as a two type-solvent mixture. By using a cosolvent, the reaction temperature can be lowered and the consumption of expensive ethyl acetate can be reduced. When using a mixture of two types of solvents, ethyl acetate and the cosolvent can be blended in a weight ratio of 5:5 to 9:1, preferably 6:4 to 8:2.

The solvent may be used in the amount of 50 to 200 parts by weight, specifically 80 to 150 parts by weight, per 100 parts by weight of the monomers used in the step (i).

In the step (i), a polymerization initiator can be added for the polymerization of the hydrophilic monomer and hydrophobic monomer. The polymerization initiator plays a role in generating radicals to induce cross-linking reactions.

The polymerization initiator can be an additive that initiates polymerization of the monomers by heat or light, and a thermal polymerization initiator or a photopolymerization initiator can be used, preferably a thermal polymerization initiator.

For example, in the present invention, as the polymerization initiators, one or more of azo-based initiators like 2,2-azobisisobutyronitrile, 2,2-azobis-2-methylbutyronitrile, 2,2-azobis-2,4-dimethylvaleronitrile; peroxide ester-based initiators like dipropyl peroxodicarbonate, diisopropyl peroxodicarbonate, bis-4-butylcyclohexyl peroxodicarbonate, diethoxyethyl peroxodicarbonate; and peroxy dicarbonate compounds like dimethyl hydroxybutyl peroxyneodecanoate, amyl peroxyneodecanoate, butyl peroxyneodecanoate can be used.

The polymerization initiator can be used in an amount of 0.05 to 3 parts by weight, preferably 0.1 to 2 parts by weight, per 100 parts by weight of the total monomers used in the step (i).

In the step (i), monomers are reacted to form an amphiphilic polymer. For example, using a thermal polymerization initiator, the reaction mixture can be heated to initiate the polymerization reaction. Specifically, the reaction temperature can be raised to 50 to 100°C, preferably 70 to 90°C, and the polymerization can be completed through a maintenance reaction lasting 10 to 90 minutes, preferably 15 to 60 minutes.

Following the polymerization of the hydrophilic monomer and hydrophobic monomer in the step (i), amphiphilic polymers are obtained that have both hydrophilic and hydrophobic parts within a single molecule.

Next, by adding hydrophobic monomers to the manufactured amphiphilic polymers and allowing them to react, a colloidal adhesive resin is produced.

The types of hydrophobic monomers that can be used in the step (ii) include those mentioned in the description of the step (i), and the hydrophobic monomers added in the step (ii) can be the same or different from those used in the manufacture of amphiphilic polymers in the step (i).

When hydrophobic monomers are added, due to the difference in properties between the hydrophobic monomers and the amphiphilic polymers, the hydrophobic monomers form a core and are located inside the amphiphilic polymers. Consequently, a colloidal adhesive resin that comprises a core comprising the hydrophobic monomers and a shell comprising the amphiphilic polymers is manufactured. This adhesive resin is in a non-aqueous dispersion (NAD) polymer phase, which allows the production of a high-concentration adhesive with relatively low viscosity by the formation of NAD polymer phase, and reduces the amount and content of solvent in the adhesive layer manufacturing process, thereby reducing energy consumed per unit area for solvent volatilization without deterioration of physical properties.

In the step (ii), the weight of the hydrophobic monomers added can be 180 to 500 parts by weight, specifically 230 to 450 parts by weight, per 100 parts by weight of the monomers used for the manufacture of amphiphilic polymers in the step (i).

A small amount of hydrophilic monomers can also be added in the step (ii). The types of hydrophilic monomers that can be used in the step (ii) include those mentioned in the description of the step (i), and the hydrophilic monomers added in the step (ii) can be the same or different from those used in the manufacture of amphiphilic polymers in the step (i).

The hydrophilic monomers can be added in an amount of 20 parts by weight or less, preferably 0.1 to 10 parts by weight, and more preferably 0.2 to 5 parts by weight per 100 parts by weight of the hydrophobic monomers added in the step (ii). In this range, the viscosity can be more easily reduced by the coating solvent, producing an adhesive resin with excellent tackiness. More preferably, hydrophilic monomers can be added in an amount of 0.5 to 3 parts by weight per 100 parts by weight of hydrophobic monomers.

The total weight of the monomers used in the step (ii) can be 200 to 500 parts by weight, preferably 250 to 450 parts by weight, per 100 parts by weight of the total monomers used in the step (i).

Solvents and polymerization initiators can also be added in the step (ii). The types of solvents and polymerization initiators that can be used in the step (ii) include those mentioned in the description of the step (i), and those used in step (ii) can be the same or different from those used in the step (i).

The solvent can be added in an amount of 10 to 150 parts by weight, specifically 20 to 100 parts by weight, per 100 parts by weight of the total monomers added in the step (ii). The polymerization initiator can be added in an amount of 0.05 to 5 parts by weight, preferably 0.1 to 3 parts by weight, per 100 parts by weight of the total monomers added in the step (ii).

After mixing the monomer mixture, additional solvent and polymerization initiator can be added to fully react the unreacted monomers. The solvent and polymerization initiator can be added in the ranges of 1 to 20 parts by weight and 0.05 to 3 parts by weight, respectively, per 100 parts by weight of the total monomers added in the step (ii).

The process may also include additional steps such as adding more solvent to adjust the non-volatile matter (NVM) of the manufactured adhesive resin. The non-volatile matter of the final adhesive resin can be 50 to 70% by weight, specifically about 60% by weight, exhibiting a viscosity of 2,000 to 10,000 cPs, preferably 2,000 to 8,000 cPs.

In the manufacturing process of the adhesive resin (i.e., the entire process including the steps (i) and (ii)), the total weight of solvent used per 100 parts by weight of the total monomers can be 30 to 100 parts by weight, preferably 50 to 80 parts by weight. According to the present invention, an adhesive resin with excellent properties can be manufactured while using a smaller amount of solvent relative to the monomers used.

Specifically, in the general manufacturing process of adhesive resins, when the amount of solvent is reduced to adjust the non-volatile matter to 45% by weight or more, the adhesive resin may fail to be obtained due to gelation of the monomers during the reaction, or the viscosity may exceed 10,000 cPs under conditions of 60% non-volatile matter, requiring a large amount of coating solvent in subsequent processes. In contrast, the process of the present invention allows the non-volatile matter to be adjusted to 50% by weight or more at a viscosity of 2,000 to 10,000 cPs, preferably 3,000 to 8,000 cPs, and suitable viscosity can be achieved with a small amount of solvent in the coating process.

Therefore, using the present invention can reduce the usage of organic solvents and, even when using low-boiling-point solvents, the reaction progresses smoothly, thereby significantly reducing greenhouse gas emissions from the adhesive manufacturing process.

Through this method, the reaction of the step (ii) is completed, producing a colloidal adhesive resin that comprises a core comprising hydrophobic monomers and a shell comprising amphiphilic polymers. By using the present invention, the production of high-concentration adhesive resin through a low-carbon emission process is possible, resulting in excellent productivity of the resin. Additionally, despite the high concentration of the adhesive resin of the present invention, the viscosity can be easily reduced with a small amount of solvent in subsequent processes, thus reducing the amount of solvent required for coating and the energy consumed by solvent volatilization after coating, and it is possible to manufacture an eco-friendly adhesive with excellent adhesion and heat resistance.

The present invention also provides an eco-friendly adhesive composition that comprises the eco-friendly adhesive resin.

The adhesive composition of the present invention comprises the adhesive resin manufactured according to the present invention and a curing agent.

In the present invention, the curing agent used can be one or more multifunctional curing agents selected from the group consisting of isocyanate compounds, epoxy compounds, aziridine compounds, and metal chelate compounds.

Specifically, the curing agents can be one or more of isocyanate compounds such as diphenylmethane-4,4'-diisocyanate, 1,3-xylene diisocyanate, 1,4-xylene diisocyanate, 1,3-bis(isocyanatomethyl) cyclohexane, tetramethyl xylene diisocyanate, hexamethylene diisocyanate, 2,2,4-trimethyl hexamethylene diisocyanate, a xylene diisocyanate adduct of trimethylolpropane, a toluene diisocyanate adduct of trimethylolpropane, a hexamethylene diisocyanate adduct of trimethylolpropane, an isocyanurate of toluene diisocyanate (TDI isocyanurate), an isocyanurate of hexamethylene diisocyanate (HDI isocyanurate), an isocyanurate of isophorone diisocyanate (IPDI isocyanurate), etc.; epoxy compounds such as ethylene glycol diglycidyl ether, triglycidyl ether, trimethylolpropane triglycidyl ether, N,N,N',N'-tetraglycidyl ethylenediamine, N,N,N',N'-tetraglycidyl xylenediamine, glycerin diglycidyl ether, etc.; aziridine compounds such as N,N'-toluene-2.4-bis(1-aziridinecarboxamide), N,N'-diphenylmethane 4,4'-bis(1-aziridinecarboxamide), triethylene melamine, bis(isophtaloyl)-1-(2-methylaziridine), tri-1-aziridinyl phosphine oxide, etc.; metal chelate compounds involving multivalent metals such as aluminum, iron, zinc, tin, titanium, antimony, magnesium, and/or vanadium coordinated with acetylacetone or ethyl acetoacetate, etc.

The curing agent can be used in an amount of 0.01 to 5 parts by weight, specifically 0.05 to 1 part by weight per 100 parts by weight of adhesive resin. In this range, the adhesion and other physical properties can be appropriately adjusted.

The adhesive composition of the present invention can further comprise a viscosity-adjusting solvent for coating. In describing the present invention, the solvent used in the adhesive composition is referred to as "coating solvent" to distinguish it from the solvent in the adhesive resin.

The coating solvent comprised in the adhesive composition can be organic solvents such as esters, ketones, and alcohols. Particularly, the use of low-boiling-point solvents as the coating solvent, with a boiling point below 80°C, is advantageous as it allows the adhesive to dry at low temperatures in subsequent processes. Low-boiling-point solvents such as ethyl acetate, ethyl alcohol, acetone, methanol, etc., can be used.

The coating solvent can be used in an amount of 5 to 40 parts by weight, preferably 8 to 30 parts by weight, more preferably 10 to 25 parts by weight, per 100 parts by weight of adhesive resin.

By adding the coating solvent, the viscosity of the adhesive composition can be adjusted to 500 to 3,000 cPs, preferably 1,000 to 2,000 cPs, thus showing suitable coating properties for forming the adhesive layer.

While typical adhesive resins require a substantial amount of coating solvent to achieve a suitable viscosity for coating, the adhesive resin of the present invention, despite its high-viscosity properties, smoothly reduces in viscosity upon the addition of coating solvent. Therefore, according to the present invention, even with a small amount of coating solvent mixed, the coating properties of the adhesive are excellent, and the amount of energy consumed by the volatilization of the coating solvent is reduced.

Additionally, the adhesive composition of the present invention can further comprise one or more additives used to adjust the properties of the adhesive, such as tackifiers, cross-linking catalysts, silane coupling agents, etc. These additives can be used in amounts that do not affect the efficacy of the invention, for example, 0.0001 to 50 parts by weight per 100 parts by weight of non-volatile matter of the adhesive resin.

The present invention also provides an eco-friendly adhesive layer formed using the adhesive resin. The adhesive layer, formed by the application and drying of the adhesive composition, can be used in various forms such as adhesive tapes and films.

The adhesive layer is formed by coating the adhesive composition of the present invention onto a substrate. The thickness of the adhesive layer can be adjusted depending on its use, for example, ranging from 5 to 500*µ*m, preferably 10 to 200*µ*m.

The substrate for forming the adhesive layer can be selected based on the form of use, including tape substrates, release films, and the surfaces to be bonded. Additionally, the substrate can be a material on which the adhesive composition can be coated, such as polyethylene terephthalate, polyethylene, polypropylene, polycarbonate, polyimide, polyurethane, etc. Among these, the use of polyethylene terephthalate, a rigid material, is preferable as it can perform a buffering action through impact absorption.

The application of the adhesive composition can be performed using various coating methods used in the adhesive coating field, such as comma coating, doctor blade, bar coating, gravure coating, slot die coating, spin coating, etc. Especially, roll-to-roll methods enable techniques such as comma coating, gravure coating, and slot die coating, thus maintaining high production efficiency even when low-carbon emission processes are applied.

After the application of the adhesive composition, the adhesive layer can be manufactured by drying at temperatures of 60 to 150°C, preferably 80 to 120°C, more preferably 85 to 110°C. The drying process can be performed for 30 to 240 seconds, preferably 60 to 120 seconds, specifically 90 to 150 seconds.

A curing process can be performed at 30 to 60°C for a period of 12 to 60 hours after the drying process.

When using the present invention, coating with low-boiling-point solvents is facilitated, allowing the drying temperature to be set below 120°C, preferably below 110°C, for example, at 100°C, and the manufactured adhesive layer exhibits excellent adhesiveness and heat resistance. Additionally, since a small amount of solvent is used in the manufacturing process of the adhesive, the time consumed by volatilization is short, resulting in high production efficiency, and the adhesive can be manufactured through an environmentally friendly process with low carbon emissions.

### Example

The present invention is described in more detail through the following examples. However, these examples are intended to illustrate the present invention by describing some experimental methods and configurations, and the scope of the present invention is not limited to these examples.

### Preparation Example 1: Manufacture of Adhesive Resin

### Example: Manufacturing of Acrylic Adhesive Resin Using Non-aqueous Dispersion

To manufacture the adhesive resin, a reaction apparatus (flask) equipped with a stirrer, reflux condenser, thermometer, and a dropping funnel were prepared.

Monomer mixture A was added to the reaction flask, followed by the addition of 9.6g of ethyl alcohol and 18.4g of ethyl acetate. As a polymerization initiator, 0.1g of AIBN (azobisisobutyronitrile) was added. The mixture was then heated to 80°C to initiate the reaction, and a maintenance reaction was carried out for 30 minutes to form amphiphilic polymers.

Next, monomer mixture B was added to the monomer dropping funnel, and a mixture of 10.4g of ethyl alcohol, 17.6g of ethyl acetate, and 0.4g of polymerization initiator AIBN was prepared and added to the initiator dropping funnel. Then dropping was carried out simultaneously for 90 minutes. After the completion of dropping, a maintenance reaction was conducted for 60 minutes, and 10g of ethyl acetate and 0.3g of AIBN were added to the initiator dropping funnel and dropped over 30 minutes to completely react any unreacted monomers. After the reaction, the mixture was cooled, the non-volatile matter (NVM) was adjusted to 60% with ethyl acetate, and the reaction was terminated.

During the reaction, the amphiphilic polymers and relatively hydrophobic monomers were transformed into colloidal particles with a core-shell structure, gradually turning the clear solution to milky solution.

The composition of the monomers used in the experiment and the properties of the synthesized adhesive are shown in Table 1 below. The viscosity was measured at 25°C using ASTM D2196.

**[TABLE 1]**

| Content | Monomer | Example 1 | Example2 | Example3 | Example4 | Example5 | Example6 | Example7 |
|---|---|---|---|---|---|---|---|---|
| Monomer Mixture A | VA | 18 | - | - | - | - | - | - |
| | AA | 2.5 | 1.5 | 0.3 | 3.5 | 3.5 | 3.5 | 0.3 |
| | EA | - | 18 | 18 | - | - | - | 15 |
| | 2-HEA | - | - | 4.4 | - | - | - | 5 |
| | 2-EHA | - | - | - | 20 | 20 | 20 | - |
| | 2-HPA | - | - | - | 2.2 | 2.2 | 2.2 | - |
| Monomer MixtureB | AA | 2.5 | 1.5 | 0.3 | 3.5 | 3.5 | - | 0.3 |
| | 2-EHA | 54 | 55.5 | 49.6 | 25.6 | 25.6 | 18 | - |
| | BA | 23 | 23.5 | 23 | 28 | 28 | 45 | - |
| | 2-HEA | - | - | 4.4 | - | - | - | - |
| | LMA | - | - | - | - | - | - | 64.4 |
| | CHMA | - | - | - | - | - | - | 15 |
| | 2-HPA | - | - | - | 2.2 | 2.2 | - | - |
| | EA | - | - | - | 15 | 5 | - | - |
| | MA | - | - | - | - | 10 | - | - |
| | β-CEA | - | - | - | - | - | 11.3 | - |
| Synthesis Result | NVM (%) | 59.8 | 60.0 | 59.9 | 60.0 | 60.2 | 60.3 | 59.7 |
| | Viscosity (cPs) | 6000 | 5000 | 9100 | 5900 | 6200 | 7000 | 8420 |

### Comparative Example: Manufacturing of Acrylic Adhesive Resin Using Conventional Solution Polymerization

The same reaction apparatus as used in the Preparation Example was prepared. 30g of monomer mixture C (30wt%) was added to the reaction flask, followed by the addition of 15g of ethyl alcohol and 30g of ethyl acetate. As a polymerization initiator, 0.5g of AIBN (azobisisobutyronitrile) was added. The mixture was then heated to 80°C to initiate the reaction, and a maintenance reaction was carried out for 30 minutes.

Next, 70g of monomer mixture C (70wt%), 21.5g of ethyl acetate, and 0.3g of polymerization initiator AIBN were dropped over 90 minutes. After the completion of dropping, a maintenance reaction was conducted for 60 minutes. Then, 33g of ethyl acetate and 0.5g of AIBN were dropped over 60 minutes, and the reaction was maintained for an additional 3 hours before termination. The non-volatile matter (NVM) was adjusted using ethyl acetate. An attempt was made to adjust the NVM to between 50 to 60% by reducing the amount of solvent, but due to gelation of the monomers during the reaction when the solvent amount was reduced, the final product could not be obtained. Therefore, a polymerizable amount of solvent was added to manufacture the resin.

The composition of the monomers used in the experiment and the properties of the synthesized adhesive are shown in Table 2 below. The viscosity was measured at 25°C using ASTM D2196.

**[TABLE 2]**

| Mixture | Monomer | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|---|
| Monomer Mixture C | VA | 18 | - | - | - | - | - | - |
| | AA | 5 | 0.6 | 0.6 | 7 | 7 | 3.5 | 0.6 |
| | EA | - | 18 | 18 | 15 | 5 | - | 15 |
| | 2-HEA | - | - | 8.8 | - | - | - | 5 |
| | 2-EHA | 54 | 54 | 49.6 | 45.6 | 45.6 | 38 | - |
| | 2-HPA | - | 4.4 | - | 4.4 | 4.4 | 2.2 | - |
| | BA | 23 | 23 | 23 | 28 | 28 | 45 | - |
| | LMA | - | - | - | - | - | - | 64.4 |
| | CHMA | - | - | - | - | - | - | 15 |
| | MA | - | - | - | - | 10 | - | - |
| | β-CEA | - | - | - | - | - | 11.3 | - |
| Synthesis Result | NVM (%) | 40 | 45 | 35 | 40 | 40 | 40 | 35 |
| | Viscosity (cPs) | 5000 | 4500 | 5100 | 4100 | 4000 | 4200 | 4800 |

### Experimental Example 1: Measurement of Viscosity Changes by Amount of Solvent Added

To achieve the appropriate coating viscosity of 1,000 to 2,000 cPs for comma coating, the viscosity changes according to the dilution amount of solvent were measured. For 100g of adhesive resin obtained from the Examples and Comparative Examples, viscosity changes were measured while adding ethyl acetate. The experiment was concluded without adding further solvent once the viscosity dropped to around 1,000 cPs. The results of these viscosity changes are presented in Tables 3 and 4.

**[TABLE 3]**

| EAc Addition Amount (g) | Example 1 | Example2 | Example3 | Example4 | Example5 | Example6 | Example7 |
|---|---|---|---|---|---|---|---|
| 0 | 6000 | 5000 | 9100 | 5900 | 6200 | 7000 | 8420 |
| 5 | 3560 | 3050 | 6750 | 4210 | 5400 | 6200 | 7100 |
| 10 | 2780 | 2250 | 3260 | 2210 | 2800 | 4210 | 6230 |
| 15 | 2010 | 1740 | 1800 | 1100 | 1670 | 1900 | 3510 |
| 20 | 1420 | 1350 | 1210 | - | 990 | 1360 | 1910 |
| 25 | 1150 | 1075 | 640 | - | - | 420 | 870 |
| 30 | - | - | - | - | - | - | - |
| 35 | - | - | - | - | - | - | - |

**[TABLE 4]**

| EAc Addition Amount (g) | Com. Ex. 1 | Com. Ex. 2 | Com. Ex. 3 | Com. Ex. 4 | Com. Ex. 5 | Com. Ex. 6 | Com. Ex. 7 |
|---|---|---|---|---|---|---|---|
| 0 | 5000 | 4500 | 5100 | 4100 | 4000 | 4200 | 4800 |
| 5 | 4050 | 3900 | 4500 | 3900 | 3600 | 3850 | 4290 |
| 10 | 3900 | 3510 | 3200 | 3500 | 3400 | 3580 | 3620 |
| 15 | 2860 | 2790 | 2700 | 2600 | 2800 | 2720 | 3050 |
| 20 | 2544 | 2190 | 2300 | 2200 | 2300 | 2430 | 2800 |
| 25 | 2042 | 1610 | 1800 | 1980 | 2010 | 2100 | 2500 |
| 30 | 1770 | 1050 | 1600 | 1500 | 1800 | 1850 | 1820 |
| 35 | 1170 | - | 1100 | 1000 | 1500 | 1430 | 1590 |

Based on the experimental results, the adhesive of the present invention exhibited a high solid content and the viscosity of the adhesive could be controlled to below 2,000 cPs with 15 to 20g of solvent. This indicates that the adhesive of the present invention uses less solvent compared to conventional adhesives, resulting in lower carbon emissions and reduced energy consumption due to solvent evaporation during the formation of the adhesive layer.

In contrast, the adhesive from the Comparative Example, manufactured using a conventional process, required at least 25g of solvent to dilute the adhesive to adjust its viscosity, despite its lower solid content and higher solvent content. Consequently, the adhesive resin of the Comparative Example not only uses more solvent in the manufacturing process but also consumes more energy per unit area to evaporate the solvent during the adhesive layer production.

Thus, the experimental results demonstrate that using the adhesive resin produced by the low-carbon emission process of the present invention can reduce the amount of organic solvent needed during coating.

### Preparation Example 2: Adhesive Tape Production

For comma coating, an adhesive composition was prepared using 100g of the adhesive resin from Preparation Example 1, 0.5g of a curing agent (Aekyung Chemical AK-75), and ethyl acetate. Regarding ethyl acetate added to adjust the coating viscosity,20g of ethyl acetate was added for the adhesive resin of the Example, while 30g was added for the adhesive resin of the Comparative Example.

To manufacture the adhesive tape, a comma coater was used to form an adhesive layer with a thickness of 25,um. A release film of 25,um-thick PET film was used, and for the substrate film, a 50*µ*m-thick PET film was used.

After applying the adhesive layer, a drying process was conducted at 100°C for 120 seconds, followed by curing at 43°C for 48 hours to manufacture the adhesive tape.

### Experimental Example 2: Property Comparison of Adhesive Tape

For the adhesive tape produced in Preparation Example 2, adhesion and heat resistance were measured.

Adhesion was measured using a UTM device according to KS T 1028. A 25mm wide tape was pressed onto a SUS304 adherend using a 2.0kg rubber roller, left at room temperature for 30 minutes, and the 180° peel value was measured at a speed of 300mm/min.

For heat resistance, a sample size of 25x150mm was prepared and pressed onto SUS at 25x25mm under a 2.0kg load, left at room temperature for 30 minutes. Then, a 500g load was applied, the temperature was increased by 10°C every 10 minutes starting from 50°C, and the temperature at detachment was recorded.

The room temperature adhesion and heat resistance of the measured adhesive tape are presented in Table 5 below.

**[TABLE 5]**

| Adhesive Resin | Example 1 | Example2 | Example3 | Example4 | Example5 | Example6 | Example7 |
|---|---|---|---|---|---|---|---|
| Adhesiveness at room temperature (gf/25mm) | 2228 | 2053 | 1478 | 1586 | 1532 | 1820 | 2150 |
| Heat resistance (°C) | >150 | >150 | 150 | >150 | 150 | >150 | >150 |
| Adhesive Resin | Com. Ex. 1 | Com. Ex. 2 | Com. Ex. 3 | Com. Ex. 4 | Com. Ex. 5 | Com. Ex. 6 | Com. Ex. 7 |
| Adhesiveness at room temperature (gf/25mm) | 2029 | 1100 | 1265 | 1607 | 1476 | 1568 | 1826 |
| Heat resistance (°C) | 140 | 140 | 150 | 140 | 150 | 150 | 150 |

According to the experimental results, when using the adhesive resin manufactured by the method of the present invention, the adhesiveness of the tape was found to be similar or higher, and the heat resistance was superior, compared to tapes using adhesive resins manufactured by the conventional solution polymerization method with the same monomers.

From these results, it was confirmed that by applying the low-carbon emission process of the present invention to the manufacturing process of adhesive tapes and using an adhesive composition with high non-volatile matter, it is possible to produce adhesives with superior properties such as adhesion and heat resistance, while using less solvent and reducing carbon emissions compared to existing products.

While some embodiments of the present invention have been described, it should be understood that the present invention is not limited to these embodiments, but modifications and variations may be made without departing from the spirit of the present invention, and such modifications and variations are also intended to fall within the scope of the present invention.

## Claims

1. A method for manufacturing an eco-friendly adhesive resin, comprising the steps of:
(i) polymerizing a hydrophilic monomer and a hydrophobic monomer to produce an amphiphilic polymer; and
(ii) adding a hydrophobic monomer to the amphiphilic polymer and reacting them to form a colloidal adhesive resin comprising a core comprising the hydrophobic monomer and a shell comprising the amphiphilic polymer.

2. The method for manufacturing an eco-friendly adhesive resin of claim 1, wherein in the step (i), a weight ratio of the hydrophilic monomer to the hydrophobic monomer ranges from 1:1 to 1:15.

3. The method for manufacturing an eco-friendly adhesive resin of claim 1, wherein in the step (i), the hydrophilic monomer comprises at least one hydrophilic monomer having one or more functional groups selected from the group consisting of carboxylic, hydroxyl, amine, and ether groups.

4. The method for manufacturing an eco-friendly adhesive resin of claim 1, wherein the hydrophobic monomers in the steps (i) and (ii) independently comprise one or more hydrophobic monomers selected from the group consisting of vinyl ester-based monomers and alkyl (meth)acrylate-based monomers.

5. The method for manufacturing an eco-friendly adhesive resin of claim 1, wherein in the step (ii), 20 or less parts by weight of a hydrophilic monomer are further added per 100 parts by weight of the hydrophobic monomer added to the amphiphilic polymer.

6. The method for manufacturing an eco-friendly adhesive resin of claim 1, wherein the total weight of the monomers used in the step (ii) ranges from 200 to 500 parts by weight per 100 parts by weight of the monomers used in step (i).

7. The method for manufacturing an eco-friendly adhesive resin of claim 1, wherein the reactions in the steps (i) and (ii) are carried out in a solvent.

8. The method for manufacturing an eco-friendly adhesive resin of claim 7, wherein in the step (i), the solvent is used in an amount of 50 to 200 parts by weight per 100 parts by weight of the total monomers.

9. The method for manufacturing an eco-friendly adhesive resin of claim 7, wherein in the step (ii), the solvent is used in an amount of 10 to 150 parts by weight per 100 parts by weight of the total monomers.

10. The method for manufacturing an eco-friendly adhesive resin of claim 7, wherein the boiling point of the solvent is 80°C or lower.

11. The method for manufacturing an eco-friendly adhesive resin of claim 7, wherein the solvent in the steps (i) and (ii) independently is a solvent mixture comprising ethyl acetate and one or more co-solvents.

12. The method for manufacturing an eco-friendly adhesive resin of claim 1, wherein the reactions in the steps (i) and (ii) are performed using a polymerization initiator.

13. An eco-friendly adhesive resin manufactured by the method of any one of claims 1 to 12.

14. An eco-friendly adhesive composition comprising the eco-friendly adhesive resin of claim 13 and a curing agent.

15. The eco-friendly adhesive composition of claim 14, wherein the curing agent is comprised in an amount of 0.01 to 5 parts by weight per 100 parts by weight of the adhesive resin.

16. The eco-friendly adhesive composition of claim 14, further comprising a coating solvent.

17. The eco-friendly adhesive composition of claim 16, wherein the coating solvent is comprised in an amount of 5 to 40 parts by weight per 100 parts by weight of the adhesive resin.

18. An eco-friendly adhesive layer formed using the eco-friendly adhesive resin of claim 13.

19. The eco-friendly adhesive layer of claim 18, wherein the thickness of the adhesive layer is 5 to 500*µ*m.
